# FASCICULE DE BREVET EUROPEEN

(11) **EP 2 538 046 B1**
(45) Date de publication et mention de la délivrance du brevet: **22.04.2015**
(21) Numéro de dépôt: 12171873.8
(22) Date de dépôt: 13.06.2012
(51) Int. Cl.: F01N 3/08, F01N 9/00, F01N 13/10, F02D 41/02, F02D 41/00

(54) **Méthode de contrôle d'un moteur à combustion interne**
Methode zum Kontrollieren eines Verbrennungsmotors
Method for controlling an internal combustion engine

(30) Priorité: 22.06.2011 FR 1155488
(43) Date de publication de la demande: 26.12.2012
(73) Titulaire: Delphi Automotive Systems Luxembourg SA, 4940 Bascharage (LU)
(72) Inventeur: Aggoune, Karim, 57100 Thionville (FR)
(74) Mandataire: Allain, Michel Jean Camille

(56) Documents cités:
- DE-A1- 10 003 903
- DE-A1-102005 018 497
- FR-A1- 2 846 036
- US-A1- 2003 051 465
- US-B1- 6 467 259

## Description

### DOMAINE TECHNIQUE

L'invention est relative à une méthode de contrôle d'un moteur à combustion interne et en particulier aux étapes relatives à la régénération des pièges à NOx situés dans les lignes d'échappement. L'invention est également relative à un contrôleur et à un moteur mettant en oeuvre ladite méthode.

### ARRIERE-PLAN TECHNOLOGIQUE DE L'INVENTION

Les cylindres d'un moteur sont le plus souvent disposés «en ligne», «en V» ou «à plat». L'alimentation en mélange air-carburant est réalisé, d'une part par des injecteurs, un au moins par cylindre, qui pourvoient le carburant et, d'autre part par un doseur d'air commun à tous les cylindres. Le doseur le plus fréquemment utilisé est du type à papillon orientable, l'air étant ensuite dirigé vers chaque cylindre par un distributeur, également appelé manifold. Le mélange air-carburant est réalisé dans les chambres de combustion des cylindres. L'échappement des gaz brûlés peut se faire suivant plusieurs lignes d'échappement. Ainsi un moteur à six cylindres peut avoir deux lignes d'échappements, chaque ligne collectant les gaz brûlés de trois cylindres. Dans le but de gérer au mieux la combustion et l'échappement, les lignes d'échappement peuvent comprendre, d'amont en aval, une sonde linéaire qui mesure la richesse en carburant du mélange, un catalyseur, un piège à oxyde d'azote (NOx), et éventuellement un capteur de NOx et un capteur d'oxygène. Par ailleurs, les moteurs peuvent fonctionner en mode de combustion stratifié ou en mode de combustion homogène. En mode stratifié, le doseur d'air est en permanence ouvert au maximum et le mélange air-carburant est pauvre en carburant. En mode de combustion homogène l'ouverture du doseur d'air varie en fonction de la demande de carburant de sorte à conserver un rapport massique air/carburant constant le plus proche possible du rapport choisi lors de la calibration du véhicule. Les moteurs actuels à combustion homogène sont souvent calibrés avec des mélanges proches de la stoechiométrie, soit un rapport massique air/carburant égal à 14,6 dans le cas de moteurs à essence.

Quel que soit le mode de combustion choisi par défaut, stratifié ou homogène-pauvre, la totalité du carburant injecté est brûlé et les gaz d'échappement sont riches en NOx. Les NOx sont captés par les pièges à NOx qui se remplissent, voire se saturent, et doivent impérativement être purgés régulièrement faute de quoi les NOx ne seraient plus captés et s'échapperaient directement dans l'atmosphère. Les réglementations environnementales en vigueur limitent à des quantités minimes les NOx pouvant être relâchés dans l'atmosphère.

Pour purger les pièges à NOx de ces moteurs, une unité de contrôle qui commande pilote et supervise le fonctionnement général du moteur fait basculer la combustion du mode par défaut, stratifié ou homogène-pauvre, en un mode homogène-riche en carburant présentant un rapport massique air/carburant inférieur à 14,6 par exemple un rapport de 12,5. En mode homogène-riche une partie du carburant injecté n'est que partiellement brûlé faute d'oxygène et se transforme en monoxyde de carbone (CO) et en gaz hydrocarboné (HC). Les particules CO et HC entrent dans les pièges à NOx et réagissent avec le NOx piégé au cours d'une réaction d'oxydoréduction, pour former des substances pouvant sans crainte être relâchées dans l'atmosphère. Par exemple, dans le cas d'un piège à NOx contenant du baryum (Ba), les NOx sont piégés sous forme de nitrate de baryum, Ba(NO₃)₂, qui lors de la purge se combine au CO pour former du carbonate de baryum (BaCO₃) de l'azote (N) et de l'oxygène (O) qui s'échappent. Le piège à NOx se vide alors de ses NOx.

La stratégie de purge mise en oeuvre doit être précise car les particules CO et HC ne doivent pas non plus s'échapper telles quelles dans l'atmosphère. Elles doivent impérativement trouver des NOx dans le piège à NOx pour réagir avec. Le changement de mode de combustion est piloté par l'unité de contrôle dès qu'elle reçoit l'information qu'un des pièges à NOx est saturé. L'information peut être fournie par les capteurs de NOx placés juste en aval des pièges à NOx, tel que décrit dans FR2846036 et US2003051465, ou bien, en l'absence de tels capteurs via un estimateur numérique qui modélise le remplissage du piège à NOx. Le changement de mode de combustion s'opère quand à lui par pilotage du doseur d'air de sorte que le mélange air/carburant qui en mode standard est pauvre en carburant devienne, en mode purge, légèrement riche en carburant.

Un problème inhérent aux moteurs multicylindres ayant un doseur d'air commun et des lignes d'échappement distinctes est que pour de multiples raisons physico-chimiques, les deux, voire plus de deux pièges à NOx ne se remplissent pas exactement à la même vitesse. Il est cependant préférable de réaliser des purges complètes et espacées plutôt que des purges partielles et rapprochées. Il est alors essentiel de proposer une nouvelle stratégie de commande qui atteigne cet objectif.

### RESUME DE L'INVENTION

La présente invention résout les problèmes ci-dessus mentionnés en proposant une nouvelle stratégie de commande du moteur.

Plus particulièrement, l'invention concerne une méthode de pilotage d'un moteur multicylindre à combustion interne dont les cylindres forment un premier groupe d'au moins un cylindre et un second groupe d'au moins un cylindre. Chaque cylindre ayant au moins un injecteur de carburant et, le moteur étant pourvu d'une arrivée d'air et d'un doseur d'air commun aux cylindres des deux groupes, l'air étant distribué depuis le doseur commun jusque dans les cylindres par un distributeur (manifold). Les gaz d'échappement du premier groupe sont évacués par une première ligne d'échappement pourvue d'un premier piège à oxyde d'azote (NOx) et, parallèlement, ceux du second groupe sont évacués par une seconde ligne d'échappement, distincte de la première, et pourvue d'un second piège à NOx.

La méthode comprend les étapes d'alimenter les cylindres en air et en carburant selon un mode de combustion par défaut pauvre en carburant, tel un mode stratifié ou encore un mode homogène-pauvre, le mélange air/carburant injecté dans les cylindres du premier et du second groupe ayant respectivement un premier et un second rapport massique air/carburant, tous deux supérieurs au rapport stoechiométrique. Puis, dès que l'un des pièges à NOx est saturé en NOx, la combustion est basculée selon un mode de combustion riche en carburant, tel un mode homogène-riche. Les quantités injectées de carburant sont ajustées de sorte que les rapports massiques air/carburant soient alors inférieurs au rapport stoechiométrique. Du carburant en excès qui n'est que partiellement brulé s'échappe par les lignes d'échappement et purge les pièges à NOx au cours d'une réaction d'oxydoréduction. De plus, en mode riche, la méthode impose de différencier l'injection de carburant dans les groupes de cylindres de sorte que le premier rapport massique soit différent du second rapport massique, et que le piège à NOx qui était saturé se vide avantageusement plus rapidement que l'autre piège à NOx qui n'était que partiellement plein. Enfin, lorsque la purge est terminée, il faut revenir en mode de combustion pauvre par défaut.

Pour différencier l'injection de carburant, le premier rapport massique est ajusté à chaque purge en faisant varier la quantité de carburant injecté dans le premier groupe alors que le second massique reste constant. Ainsi les purges des pièges à NOx convergent en quelques itérations vers une purge complète et sensiblement simultanée.

Plus particulièrement, lorsque lors d'une purge, le premier piège à NOx est encore partiellement plein et que le second piège à NOx est déjà entièrement purgé alors, pour la purge suivante, la quantité de carburant injectée dans le premier groupe est ajustée de sorte que le premier rapport massique air/carburant soit décrémenté selon les termes d'une suite géométrique de raison constante.

Symétriquement, lorsque lors d'une purge, le premier piège à NOx est entièrement purgé et que le second piège à NOx est encore partiellement plein, alors, pour la purge suivante, la quantité de carburant injectée dans le premier groupe est ajustée de sorte que le premier rapport massique air/carburant soit incrémenté, selon les termes d'une suite géométrique de raison constante.

Dans les deux cas, la raison de la suite géométrique est préalablement choisie et mémorisée lors de la calibration initiale du moteur.

Par ailleurs, lorsque lors d'une purge les pièges à NOx sont tous entièrement purgés au cours d'un même lapse de temps prédéterminé, il est considéré que les purges sont simultanées. Alors, pour la purge suivante les rapports massique air/carburant sont inchangés.

Plus précisément, les rapports massique air/carburant sont constants tout au long de l'étape de purge en mode de combustion riche et ne peuvent être modifiés qu'au terme de la purge. Les rapports massiques modifiés sont alors utilisés lors de la purge suivante.

L'invention est également relative à unité de contrôle prévue pour piloter un moteur à combustion interne à deux groupes de cylindres, au moins un injecteur par cylindre et une arrivée d'air comprenant un doseur commun aux cylindres, l'air étant amenée du doseur aux cylindres par un distributeur. Les gaz d'échappement des deux groupes sont évacués par des lignes d'échappement distinctes, chacune d'elle étant pourvue d'un piège à oxyde d'azote (NOx). L'unité de contrôle est en permanence informée du taux de remplissage des pièges à NOx et est prévue pour exécuter une méthode de pilotage du moteur telle que précédemment décrite.

L'invention est de plus relative à un moteur à combustion interne à deux groupes de cylindres, au moins un injecteur par cylindre et une arrivée d'air comprenant un doseur d'air commun aux cylindres, l'air étant amenée du doseur aux cylindres par un distributeur. Les gaz d'échappement des deux groupes sont évacués par des lignes d'échappement distinctes, chacune pourvue d'un piège à oxyde d'azote (NOx). Le moteur est piloté par une unité de contrôle telle que précédemment décrite et qui exécute une méthode de pilotage également précédemment décrite.

Plus particulièrement le moteur peut avoir ses cylindres en ligne, tels un «six-en-ligne» dont les trois cylindres d'un côté forment le premier groupe et les trois de l'autre côté forment le second groupe. Les cylindres peuvent également être en V tels dans un V6, V8, V10... ou encore à plat, tels dans des «flat-twin, flat-four», la désignation anglaise étant la plus utilisée, ces moteurs se rencontrant plus fréquemment sur des motos.

### DESCRIPTION DES FIGURES

Un mode de réalisation de l'invention est maintenant décrit par l'intermédiaire des figures suivantes.
La Figure 1 est un schéma de moteur à deux groupes de cylindres pilotés par une unité de contrôle.
La Figure 2 est un diagramme de la méthode de commande exécutée par l'unité de contrôle de la Figure 1.

### DESCRIPTION DES MODES DE REALISATION PRÉFÉRÉS

Par soucis de simplicité de vocabulaire, la description suivante s'appuie sur un moteur V6 d'un véhicule automobile. Cependant les enseignements de cette invention peuvent être directement transposés à tous types moteurs multicylindres, quel que soit le nombre et la disposition des cylindres, qu'ils soient en V, en ligne, à plat ou selon n'importe quelle architecture, dès lors que les cylindres sont répartis en au moins deux groupes alimentés par un doseur d'air commun et que l'évacuation des gaz d'échappement se fasse via des lignes d'échappements distinctes pour chacun des groupes de cylindres. La description peut également être transposée à tout type de véhicule voire, à des moteurs d'équipements stationnaires.

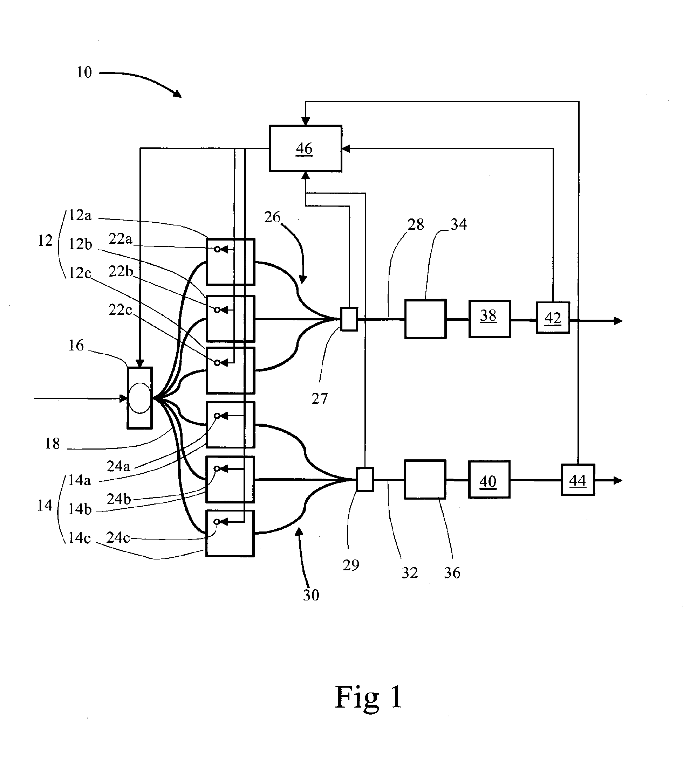

La Figure 1 schématise un moteur 10 à six cylindres qui comprend un premier banc 12 de trois cylindres 12a, 12b, 12c, et un second banc 14 de trois cylindres 14a, 14b, 14c. L'alimentation en air est réalisée par un doseur d'air commun 16 du type à papillon orientable qui alimente en parallèle tous les cylindres, 12a-14c, au travers d'un distributeur (manifold) 18. L'alimentation en carburant est réalisée par des injecteurs 22a, 22b, 22c, 24a, 24b, 24c, un par cylindre. Il existe des moteurs à deux injecteurs, voire plus, par cylindre auxquels la présente invention est directement et parfaitement adaptable.

Les trois cylindres 12a-c du premier banc 12 sont reliés via un premier collecteur 26 à une première ligne d'échappement 28 et, les trois cylindres 14a-c, du second banc 14 sont reliés via un second collecteur 30 à une seconde ligne d'échappement 32 indépendante de la première 28. Chaque ligne d'échappement comprend, d'amont en aval, une sonde linéaire 27, 29, un catalyseur 34, 36, un piège à oxyde d'azote (NOx) 38, 40, et un capteur de NOx et d'oxygène 42, 44. Nous noterons premier et second les éléments respectifs des première 28 et seconde 32 lignes d'échappement. Une unité de contrôle 46 reçoit entre autres les informations des sondes linéaires 27, 29, des capteurs de NOx et d'oxygène. En fonction des informations reçues, l'unité de contrôle 46 pilote le papillon du doseur d'air 16 ainsi que chacun des six injecteurs 22a-c, 24a-c. Notamment, l'unité de contrôle 46 ajuste le mélange air-carburant selon un rapport massique air/carburant précis et ce en fonction des informations fournis par les sondes linéaires 27, 29.

Lorsque le moteur 10 fonctionne selon un mode de combustion par défaut pauvre en carburant, des NOx sont produits et les deux capteurs de NOx 38, 40, se remplissent mais pas exactement à la même vitesse. Les tolérances dimensionnelles des pièces mécaniques entraînent de légères différences capacitaires entre les pièges à NOx. De plus, les injecteurs 22a-c, 24a-c, ont également une certaine dispersion et les cylindres produisent des quantités de NOx également légèrement différentes. Aussi lorsque le premier piège à NOx 38 est saturé, le second 40 ne l'est pas entièrement. Le capteur 42 lié au premier piège à NOx 38 informe l'unité de contrôle 46 de sa saturation et alors l'unité de contrôle 46 commande le passage selon un mode de combustion riche en carburant, tel un mode homogène-riche, simultanément pour tous les cylindres 12a-c, 14a-c. Ceci déclenche simultanément la purge de tous les pièges à NOx 38, 40. Le second piège à NOx 40 qui n'était pas entièrement plein se trouve alors vidé avant que le premier 38 ne le soit complètement.

Deux stratégies de fin de purge existent. La première consiste à ce que l'unité de contrôle 46 commande la fin de purge et le retour en mode de combustion par défaut dès que l'un des pièges à NOx est entièrement purgé. Des NOx non purgés restent alors piégés dans l'autre piège à NOx. La seconde stratégie consiste à ce que l'unité de contrôle 46 commande la fin de purge lorsque tous les pièges à NOx sont purgés.

Une conséquence de la première stratégie est que le premier piège à NOx 38, qui se rempli plus rapidement que le second 40, n'est pas entièrement purgé lors du retour en mode de combustion par défaut. Donc, non seulement il se sature plus rapidement, mais en plus sa purge n'est que partielle et il ne retient donc que moins de NOx que le second piège à NOx 40. La combinaison rapidité de remplissage plus élevée et quantité piégée plus faible entraine une accumulation de NOx non purgés, une réduction de la capacité de stockage et une saturation de plus en plus fréquente du premier piège à NOx 38, donc un déclenchement de plus en plus fréquent des purges, les purges devenant de plus en plus courtes. Après quelques cycles il se peut même que la purge soit déclenchée par le premier piège à NOx 38 plein alors que le second 40 est encore presque vide.

Une conséquence de la seconde stratégie est que dès lors qu'un piège à NOx est purgé, les particules CO et HC qui y entrent en ressortent sans transformation et sont relâchées dans l'atmosphère jusqu'à la purge complète de l'autre piège à NOx.

Les pièges à NOX 38, 40, couramment fabriqués se saturent après avoir piégés de quelques milligrammes à quelques grammes de NOx. De plus, il apparait que pour un moteur 10 six cylindres, une purge doive être faite toutes les quelques minutes, entre deux et cinq minutes environ, et que celle-ci ne dure que quelques secondes, entre trois et dix secondes environ. Quel que soit le mode de combustion par défaut celui-ci est énergétiquement plus efficace que le mode homogène-riche adopté lors des purges.

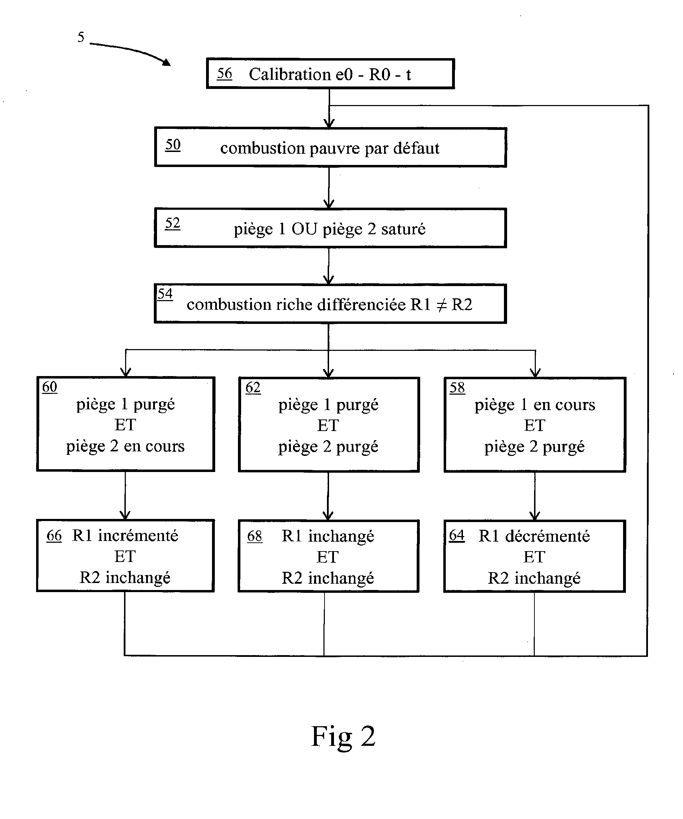

La Figure 2 présente des étapes d'une méthode 5 de gestion du moteur 10. L'unité de contrôle 46 pilote le moteur 10 selon un mode de combustion par défaut 50 pauvre en carburant par exemple, un mode homogène-pauvre ou bien stratifié. En mode homogène-pauvre en carburant le rapport massique air/carburant est supérieur au rapport stoechiométrique. En mode stratifié le doseur d'air 16 est ouvert en permanence et le mélange est également pauvre en carburant. Dès lors que l'unité de contrôle 46 reçoit l'information 52 de l'un des capteurs de NOx, par exemple le premier 42, que le piège à NOx correspondant, le premier piège à NOx 38, est saturé, l'unité de contrôle 46 commande 54 la purge de tous les pièges à NOx 38, 40. Pour se faire l'unité de contrôle 46 bascule du mode de combustion par défaut pauvre en carburant en un mode de combustion riche en carburant, mode dans lequel l'unité de contrôle 46 pilote le doseur d'air 16 ainsi que la quantité de carburant injectée. Celle-ci est augmentée de sorte que le rapport massique air/carburant devienne légèrement inférieur au rapport stoechiométrique. Une part du carburant injecté n'est alors que partiellement brûlé faute d'oxygène et se transforme en monoxyde de carbone (CO) et en gaz hydrocarbonés (HC) qui sont évacués des cylindres 12a-c, 14a-c, dans les gaz d'échappement. Les particules CO et HC pénètrent dans les pièges à NOx 38, 40, et réagissent chimiquement avec les NOx piégés au cours d'une réaction d'oxydoréduction de sorte à purger les pièges à NOx 38, 40.

Alternativement, dans certains moteurs 10 les capteurs de NOx 42, 44, sont remplacés par un algorithme embarqué qui modélise numériquement le remplissage et la purge des pièges à NOx 38, 40. L'unité de contrôle 46 opère alors les basculements de mode de combustion en fonction de cette modélisation. La description est cependant poursuivit en tenant compte de la présence de capteurs de NOx 42, 44.

Dans le but de mener en parallèle les purges des deux pièges à NOx 38, 40, l'unité de contrôle 46 choisit de compenser la différence de rapidité de remplissage entre les pièges à NOx en distinguant les quantités de carburant injectées dans les bancs 12, 14, de cylindres. Par exemple, une plus grande quantité de carburant est injectée dans les cylindres du banc dont le piège à NOx est saturé que dans les cylindres de l'autre banc dont le piège à NOx n'est pas encore entièrement rempli. Ainsi les gaz d'échappement issus du banc dont le piège à NOx était saturé comportent plus d'éléments réducteurs CO et HC que les gaz issus de l'autre banc dont le piège à NOx n'était pas encore entièrement rempli. Le piège à NOx qui était saturé se vide alors plus rapidement que celui de l'autre banc. La différence de capacité de stockage des pièges à NOx tend alors à s'estomper.

Lors de la calibration 56 du moteur 10 sont choisis et mémorisés un enrichissement relatif de calibration e0 en carburant du banc dont le piège à NOx se sature le plus vite et également, un rapport massique R0 air/carburant de purge de calibration. L'enrichissement relatif de calibration e0 est faible et peut par exemple être de 4%. Le rapport massique R0 air/carburant de purge de calibration est choisi légèrement inférieur au rapport stoechiométrique par exemple 12,5. Ainsi, si lors de la première purge le premier piège à NOx 38 se sature en premier, l'unité de contrôle 46 interprète cela comme indiquant que la purge à venir, la deuxième, devra se faire en injectant plus de carburant dans les cylindres 12a-c du premier banc 12 que dans les cylindres 14a-c du second banc 14, et ce selon un premier rapport massique R1 air/carburant injecté dans le premier banc de 12,5 x (1-0,04) = 12,0 alors le second rapport massique R2 air/carburant injecté dans les cylindres 14a-c du second banc 14 demeure égal au rapport de calibration R0 de 12,5.

La fin de purge des pièges à NOx et le retour en mode de combustion par défaut 50 peut être déclenchée soit dès qu'un des piège à NOx 38, 40, est entièrement purgé, soit lorsque tous le sont.

Si le premier piège à NOx 38, qui dans notre exemple, est celui qui était entièrement rempli et qui a déclenché la purge, est toujours en cours de purge 58 lorsque le second piège à NOx 40 se trouve être entièrement purgé alors, l'unité de contrôle 46 interprète cela comme indiquant que les cylindres 12a-c du premier banc 12 n'ont pas reçu suffisamment de carburant et augmente donc la quantité de carburant à injecter dans le premier banc 12 lors de la purge suivante. Ceci décrémente la valeur du premier rapport massique R1 air/carburant du premier banc 12. L'unité de contrôle 46 conserve inchangée la valeur du second rapport massique R2 air/carburant du second banc 14. La variation de R1 est calculée selon les termes d'une suite géométrique de raison constante et égale à l'enrichissement relatif de calibration e0. À chaque purge l'unité de contrôle 46 mémorise les valeurs des rapports massiques R1, R2, qui viennent d'être utilisées et calcule à partir d'elles les valeurs des rapports massiques qui seront utilisées lors de la purge suivante.

Ainsi en poursuivant l'exemple ci-dessus de 4% d'enrichissement relatif de calibration e0 et de rapports massique air/carburant R1 de 12,0 et R2 de 12,5, utilisés lors de la première purge,
- si, le premier piège à NOx 38 n'a pas été entièrement purgé lors de la première purge alors, le premier rapport massique R1 air/carburant est recalculé et lors de la deuxième purge il sera égal à 12,0 x (1-0,04) = 11,52 et, le second R2 demeurera 12,5.
- puis si, le premier piège à NOx 38 n'a toujours pas été entièrement purgé lors de la deuxième purge alors, le premier rapport massique R1 air/carburant est recalculé et lors de la troisième purge il sera égal à 11,52 x (1-0,04) = 11,06 et, le second R2 demeurera 12,5.
- etc.

Cette progression se poursuit tant que le premier piège à NOx 38 n'a pas terminé sa purge lorsque le second piège à NOx 40 a terminé la sienne.

Par contre, dès que le premier piège à NOx 38 termine 60 sa purge avant le second piège à NOx 40, l'unité de contrôle 46 interprète cela comme indiquant que les cylindres 12a-c du premier banc 12 ont cette fois reçu trop de carburant et prévoit donc de diminuer la quantité de carburant à injecter dans les cylindres 12a-c du premier banc 12 en incrémentant la valeur du premier rapport massique R1 air/carburant du premier banc 12. L'unité de contrôle 46 conserve inchangée la valeur R2 du second rapport massique air/carburant du second banc 14. La variation de R1 est calculée selon les termes d'une suite géométrique de raison constante et égale à l'enrichissement relatif de calibration e0.

En poursuivant l'exemple ci-dessus, si au terme de la troisième purge le premier piège à NOx 38 termine sa purge avant le second piège à NOx 40 alors, le premier rapport massique R1 air/carburant est recalculé et lors de la quatrième purge il sera égal à 11,06 x (1+0,04) = 11,50 et le second R2 demeurera de 12,5.

Le premier rapport massique R1 air/carburant est ainsi incrémenté ou décrémenté de sorte à varier autour d'une valeur de convergence.

Enfin, si les deux pièges à NOx 38, 40, se purgent en l'espace d'un lapse de temps prédéterminé t et mémorisé dans l'unité de contrôle 46 lors de la calibration 56 du moteur 10, l'unité de contrôle 46 considère que les deux purges ont été simultanées 62 et alors, dans ce cas, les premier et second rapports massiques R1, R2, air/carburants demeurent inchangés lors de la purge suivante.

Grâce à ce mode de gestion la différence de remplissage entre les pièges à NOx 38, 40, s'estompe rapidement et les purges convergent de sorte à être menées en même temps et ainsi atteindre automatiquement l'objectif souhaité de purges des pièges à NOx 38, 40, complètes, simultanées et espacées.

## Revendications

1. Méthode (5) de pilotage d'un moteur (10) multicylindre à combustion interne dont les cylindres forment un premier groupe (12) d'au moins un cylindre (12a-c) et un second groupe (14) d'au moins un cylindre (14a-c), chaque cylindre (12a-c, 14a-c) ayant au moins un injecteur de carburant (22a-c, 24a-c) et étant pourvu en air par un doseur d'air (16) commun connecté à un distributeur (18) amenant l'air depuis le doseur (16) jusqu'aux cylindres (12a-c, 14a-c), les gaz d'échappement du premier groupe (12) étant évacués par une première ligne d'échappement (28) pourvue d'un premier piège à oxyde d'azote (NOx) (38) et ceux du second groupe (14) étant évacués par une seconde ligne d'échappement (32), distincte de la première (28), et pourvue d'un second piège à NOx (40), la méthode (5) étant **caractérisée en ce qu'**elle comporte les étapes suivantes :
- alimenter (50) les cylindres (12a-c, 14a-c) en air et en carburant selon un mode de combustion par défaut pauvre en carburant le mélange air/carburant injecté dans les cylindres (12a-c) du premier (12) et du second (14) groupe ayant respectivement un premier (R1) et un second (R2) rapport massique air/carburant, les deux rapports massiques (R1, R2) étant supérieurs au rapport stoechiométrique,
- dès que l'un des pièges à NOx (38, 40) est saturé (52) en NOx, basculer (54) selon un mode de combustion riche en carburant, les rapports massiques (R1, R2) air/carburant étant alors inférieurs au rapport stoechiométrique de sorte qu'un excès de carburant qui n'est que partiellement brûlé purge les pièges à NOx (38, 40) au cours d'une réaction d'oxydoréduction, et
- différencier (54) l'injection de carburant dans les groupes (12, 14) de cylindres de sorte que le premier rapport massique (R1) soit différent du second rapport massique (R2), et que le piège à NOx qui était saturé se vide plus rapidement que l'autre piège à NOx qui n'était que partiellement plein,
- revenir en mode de combustion par défaut (50) pauvre lorsque la purge est terminée,
- pour différencier (54) l'injection de carburant, à chaque purge le premier rapport massique (R1) est ajusté alors que le second (R2) reste constant de sorte que les purges des pièges à NOx (38, 40) convergent en quelques itérations vers une purge complète et sensiblement simultanée,
- lorsque lors d'une purge le premier piège à NOx (38) est encore partiellement plein alors que le second piège à NOx (40) est déjà entièrement purgé (58) alors, pour la purge suivante, le premier rapport massique (R1) air/carburant est décrémenté (64) selon les termes d'une suite géométrique de raison constante (e0) et le second rapport massique (R2) air/carburant est inchangé.

2. Méthode (5) selon la revendication précédente dans laquelle, lorsque lors d'une purge le premier piège à NOx (38) est entièrement purgé alors que le second piège à NOx (40) est encore partiellement plein (60), alors, pour la purge suivante, le premier rapport massique (R1) air/carburant est incrémenté (66), selon les termes d'une suite géométrique de raison constante (e0) et le second rapport massique (R2) air/carburant est inchangé.

3. Méthode (5) selon une quelconque des revendications précédentes dans laquelle la raison (e0) de la suite géométrique est préalablement choisie et mémorisée lors de la calibration (56) du moteur (10).

4. Méthode (5) selon une quelconque des revendications précédentes dans laquelle, lorsque lors d'une purge les pièges à NOx (38, 40) sont tous entièrement purgés (62) au cours d'un même lapse de temps (t) prédéterminé, il est considéré que les purges sont simultanées et alors, pour la purge suivante les rapports massiques (R1, R2) air/carburant sont inchangés (68).

5. Méthode (5) selon l'une quelconque des revendications précédentes dans laquelle les rapports massiques (R1, R2) air/carburant sont constants tout au long de l'étape de purge (54) en mode de combustion riche et ne peuvent être modifiés qu'au terme de cette étape, les rapports massiques (R1, R2) modifiés étant alors utilisés lors de la purge suivante.

6. Unité de contrôle (46) prévue pour piloter un moteur (10) à combustion interne à deux groupes (12, 14) de cylindres (12a-c, 14a-c), ayant au moins un injecteur (22a-c, 24a-c) par cylindre et ayant un doseur d'air (16) commun (16) aux cylindres, les gaz d'échappement des deux groupes (12,14) étant évacués par des lignes d'échappement (28, 32) distinctes chacune pourvue d'un piège à oxyde d'azote (NOx) (38, 40), l'unité de contrôle (46) étant en permanence informée du taux de remplissage des pièges à NOx (38, 40),
**caractérisée en ce que**
l'unité de contrôle (46) est prévue pour exécuter une méthode (5) de pilotage du moteur (10) selon une quelconque des revendications précédentes.

7. Moteur (10) à combustion interne à deux groupes (12, 14) de cylindres (12a-c, 14a-c), ayant un injecteur (22a-c, 24a-c) par cylindre et un doseur d'air commun (16) aux cylindres, les gaz d'échappement des deux groupes (12,14) étant évacués par des lignes d'échappement (28, 32) distinctes chacune pourvue d'un piège à oxyde d'azote (NOx) (38, 40), le moteur (10) étant **caractérisé en ce qu'**il est piloté par une unité de contrôle (46) selon la revendication 6.

8. Moteur (10) selon la revendication 7 dont les groupes de cylindres (12a-c, 14a-c) sont en ligne, en V, ou à plat.

## Patentansprüche

1. Verfahren (5) zum Ansteuern eines Mehrzylinder-Verbrennungsmotors (10), dessen Zylinder eine erste Gruppe (12) mit mindestens einem Zylinder (12a-c) und eine zweite Gruppe (14) mit zumindest einem Zylinder (14a-c) bilden, wobei jeder Zylinder (12a-c, 14a-c) zumindest eine Kraftstoffeinspritzvorrichtung (22a-c, 24a-c) aufweist und über einen gemeinsamen Luftdosierer (16) mit Luft versorgt wird, der mit einem Verteiler (18) verbunden ist, der die Luft vom Dosierer (16) zu den Zylindern (12a-c, 14a-c) führt, wobei die Abgase der ersten Gruppe (12) über einen ersten Abgasstrang (28) abgeleitet werden, der mit einer ersten Stickoxidfalle (NOx) (38) versehen ist, und die der zweiten Gruppe (14) über einen zweiten Abgasstrang (32) abgeleitet werden, der sich von dem ersten (28) separat vorgesehen ist, und mit einer zweiten NOx-Falle (40) versehen ist, wobei das Verfahren (5) **dadurch gekennzeichnet ist, dass** es die nachfolgenden Schritte umfasst:
- Versorgen (50) der Zylinder (12a-c, 14a-c) mit Luft und Kraftstoff nach einem mageren Kraftstoffverbrennungsmodus, wobei das in die Zylinder (12a-c) der ersten (12) und der zweiten (14) Gruppe eingespritzte Luft/Kraftstoffgemisch ein erstes (R1) bzw. zweites (R2) Luft/Kraftstoff-Gewichtsverhältnis aufweist, wobei die beiden Gewichtsverhältnisse (R1, R2) höher als das stöchiometrische Verhältnis ist,
- nach Sättigung (52) einer der NOx-Fallen (38, 40) mit NOx Umschwenken (54) auf einen fetten Kraftstoffverbrennungsmodus, wobei die Luft/Kraftstoff Gewichtsverhältnisse (R1, R2) dann niedriger als das stöchiometrische Verhältnis ist, so dass ein Kraftstoffüberschuss, der nur teilweise verbrannt ist, die NOx-Fallen (38, 40) im Laufe einer Reduktions-OxidationsReaktion regeneriert, und
- Differenzieren (54) der Kraftstoffeinspritzung in die Zylindergruppen (12, 14), so dass das erste Gewichtsverhältnis (R1) sich von dem zweiten Gewichtsverhältnis (R2) unterscheidet und dass die NOx-Falle, die gesättigt war, sich schneller leert als die andere NOx-Falle, die nur teilweise voll war,
- Rückkehr zum mageren Verbrennungsmodus (50), wenn die Regeneration beendet ist,
- wobei zum Differenzieren (54) der Kraftstoffeinspritzung bei jeder Regeneration das erste Gewichtsverhältnis (R1) angepasst wird, während das zweite (R2) konstant bleibt, so dass die Regenerationen der NOx-Fallen (38, 40) nach einigen Wiederholungen auf eine vollständige und im Wesentlichen gleichzeitige Regeneration zusammenfallen,
- wobei dann, wenn bei einer Regeneration die erste NOx-Falle (38) noch teilweise voll ist, während die zweite NOx-Falle (40) bereits vollständig regeneriert ist (58), das erste Luft/Kraftstoff-Gewichtsverhältnis (R1) bei der nachfolgenden Regeneration gemäß der geometrischen Folge mit konstantem Faktor (e0) dekrementiert wird (64) und das zweite Luft/Kraftstoff Gewichtsverhältnis (R2) unverändert bleibt.

2. Verfahren (5) nach dem vorangehenden Anspruch, wobei dann, wenn bei einer Regeneration die erste NOx-Falle (38) vollständig regeneriert wird, während die zweite NOx-Falle (40) noch teilweise voll ist (60), das erste Luft/Kraftstoff Gewichtsverhältnis (R1) bei der nachfolgenden Regeneration gemäß der geometrischen Folge mit konstantem Faktor (e0) inkrementiert wird (66) und das zweite Luft/Kraftstoff Gewichtsverhältnis (R2) unverändert bleibt.

3. Verfahren (5) nach einem der vorangehenden Ansprüche, wobei der Faktor (e0) der geometrischen Folge zuvor gewählt und bei der Kalibrierung (56) des Motors (10) abgespeichert wird.

4. Verfahren (5) nach einem der vorangehenden Ansprüche, wobei dann, wenn bei einer Regeneration die NOx-Fallen (38, 40) beide vollständig regeneriert werden (62), und zwar während einer gleichen vorbestimmten Zeitspanne (t), erachtet wird, dass die Regenerationen gleichzeitig erfolgen und dann bei der nachfolgenden Regeneration die Luft/Kraftstoff-Gewichtsverhältnisse (R1, R2) unverändert bleiben (68).

5. Verfahren (5) nach einem der vorangehenden Ansprüche, wobei die Luft/Kraftstoff-Gewichtsverhältnisse (R1, R2) während des gesamten Regenerationsschrittes (54) im fetten Verbrennungsmodus konstant bleiben und nur am Ende dieses Schrittes geändert werden können, wobei dann bei der nächsten Regeneration die geänderten Luft/Kraftstoff-Gewichtsverhältnisse (R1, R2) verwendet werden.

6. Steuereinheit (46) zum Ansteuern eines Verbrennungsmotors (10) mit zwei Gruppen (12, 14) von Zylindern (12a-c, 14a-c), enthaltend zumindest eine Einspritzvorrichtung (22a-c, 24a-c) pro Zylinder und einen den Zylindern gemeinsamen Luftdosierer (16), wobei die Abgase der beiden Gruppen (12, 14) über separate Abgasstränge (28, 32) abgeleitet werden, die jeweils mit einer Stickoxidfalle (NOx) (38, 40) versehen sind, wobei die Steuereinheit (46) permanent über den Füllgrad der NOx-Fallen (38, 40) informiert wird,
**dadurch gekennzeichnet, dass**
die Steuereinheit (46) dazu vorgesehen ist, ein Verfahren (5) zum Ansteuern des Motors (10) nach einem der vorangehenden Ansprüche durchzuführen.

7. Verbrennungsmotor (10) mit zwei Gruppen (12, 14) von Zylindern (12a-c, 14a-c), enthaltend eine Einspritzvorrichtung (22a-c, 24a-c) pro Zylinder und einen den Zylindern gemeinsamen Luftdosierer (16), wobei die Abgase der beiden Gruppen (12, 14) über separate Abgasstränge (28, 32) abgeleitet werden, die jeweils mit einer Stickoxidfalle (NOx) (38, 40) versehen sind, wobei der Motor (10) **dadurch gekennzeichnet ist, dass** er über eine Steuereinheit (46) nach Anspruch 6 angesteuert wird.

8. Motor (10) nach Anspruch 7, wobei die Zylindergruppen (12a-c, 14a-c) in Reihe, V-Form oder Boxeranordnung angeordnet sind.

## Claims

1. Method (5) for management of a multi-cylinder internal combustion engine (10) the cylinders of which form a first group (12) of at least one cylinder (12a-c) and a second group (14) of at least one cylinder (14a-c), each cylinder (12a-c, 14a-c) having at least one fuel injector (22a-c, 24a-c) and being provided with air through a common air regulator (16) connected to a distributor (18) bringing the air from the regulator (16) to the cylinders (12a-c, 14a-c), the exhaust gases of the first group (12) being evacuated through a first exhaust line (28) provided with a first nitrogen oxide (NOx) trap (38) and those of the second group (14) being evacuated through a second exhaust line (32), separate from the first (28), and provided with a second NOx trap (40), the method (5) being **characterised by** the fact that it includes the following steps:
- supplying (50) the cylinders (12a-c, 14a-c) with air and with fuel in a default fuel-lean combustion mode the air/fuel mixture injected into the cylinders (12a-c) of the first (12) and of the second (14) group having a first (R1) and a second (R2) air/fuel mass ratio respectively, the two mass ratios (R1, R2) being higher than the stoichiometry ratio,
- as soon as one of the NOx traps (38, 40) is saturated (52) with NOx, tripping 54 into a fuel-rich combustion mode, the air/fuel mass ratios (R1, R2) then being lower than the stoichiometric ratio so that an excess of fuel which is only partially burned purges the NOx traps (38, 40) during an oxidation-reduction reaction, and
- differentiating (54) the injection of fuel into the groups (12, 14) of cylinders so that the first mass ratio (R1) is different from the second mass ratio (R2), and that the NOx trap which was saturated empties more rapidly than the other NOx trap which was only partially full,
- returning to the default lean combustion mode (50) when the purge is finished,
- to differentiate (54) the fuel injection, at each purge the first mass ratio (R1) is adjusted while the second (R2) remains constant so that the purges of the NOx traps (38, 40) converge in a few iterations on a complete and substantially simultaneous purge,
- when at a purge the first NOx trap (38) is still partially full while the second NOx trap (40) is already entirely purged (58) then, for the following purge, the first air/fuel mass ratio (R1) is decreased (64) according to the terms of a geometric series of constant ratio (e0) and the second air/fuel mass ratio (R2) is unchanged.

2. Method (5) as described in the preceding claim in which, when at a purge the first NOx trap (38) is entirely purged while the second NOx trap (40) is still partially full (60), then, for the following purge, the first air/fuel mass ratio (R1) is increased (66), in accordance with the terms of a geometric series of constant ratio (e0) and the second air/fuel mass ratio (R2) is unchanged.

3. Method (5) as described in any one of the preceding claims in which the ratio (e0) of the geometric series is preselected and stored on calibration (56) of the engine (10).

4. Method (5) as described in any one of the preceding claims in which, when at a purge the NOx traps (38, 40) are all entirely purged (62) during a same predetermined time lapse (t), it is considered that the purges are simultaneous and then, for the following purge, the air/fuel mass ratios (R1, R2) are unchanged (68).

5. Method (5) as described in any one of the preceding claims in which the air/fuel mass ratios (R1, R2) are constant all through the purge step (54) in rich combustion mode and can only be modified at the end of this step, the modified mass ratios (R1, R2) then being used at the following purge.

6. Control unit (46) designed to manage an internal combustion engine (10) with two groups (12, 14) of cylinders (12a-c, 14a-c), having at least one injector (22a-c, 24a-c) per cylinder and having an air regulator (16) common (16) to the cylinders, the exhaust gases of the two groups (12, 14) being evacuated through separate exhaust lines (28, 32) each provided with a nitrogen oxide (NOx) trap (38, 40), the control unit (46) being permanently informed as to the filling rate of the NOx traps (38, 40),
**characterised by** the fact that
the control unit (46) is designed to execute a method (5) for management of the engine (10) as described in any one of the preceding claims.

7. Internal combustion engine (10) with two groups (12, 14) of cylinders (12a-c, 14a-c), having an injector (22a-c, 24a-c) per cylinder and an air regulator (16) common to the cylinders, the exhaust gases of the two groups (12,14) being evacuated through separate exhaust lines (28, 32) each provided with a nitrogen oxide (NOx) trap (38, 40), the engine (10) being **characterised by** the fact that it is managed by a control unit (46) as described in claim 6.

8. Engine (10) as described in claim 7 the groups of cylinders (12a-c, 14a-c) of which are in line, in a V, or flat.
